# EUROPÄISCHE PATENTANMELDUNG

(11) **EP 0 816 767 A2**
(43) Veröffentlichungstag der Anmeldung: **07.01.1998**
(21) Anmeldenummer: 97110949.1
(22) Anmeldetag: 02.07.1997
(51) Int. Cl.: F24F 3/06, F24F 11/02

(54) **Verfahren und Anlage zum Kühlen von Räumen**

(30) Priorität: 04.07.1996 DE 19626923
(71) Anmelder: STEAG AG, D-45128 Essen (DE)
(72) Erfinder: Pförtner, Johannes, Dipl.-ing., D-46286 Dorsten (DE)

(57) **Zusammenfassung**

In jedem Raum (1) ist ein Wärmetauscher (9) angeordnet, der über Wasservorlauf- und -rücklaufleitungen (7,8) an eine zentrale Kältemaschine (6) angeschlossen ist. Ein dem Wärmetauscher (9) zugeordnetes Gebläse (10) erzeugt eine Luftzirkulationsströmung in dem Raum (1). Zum Schutze von die Wärme erzeugenden Schaltschränken (2) ist unterhalb des Wärmetauschers (9) eine Auffangwanne (13) für Kondensationswasser angeordnet, die einen Ablauf (14) aufweist, der aus dem Raum (1) hinausführt. Unterhalb dieser Auffangwanne sowie unterhalb der in den Raum hineinführenden Leitungsabschnitte befindet sich eine Sicherheits-Auffangwanne (15). Die Sicherheits-Auffangwanne (15) ist mit einem Wasserwächter (16) versehen, der bei seiner Aktivierung Schnellschlußventile (17) betätigt und dadurch den zugehörigen Wärmetauscher (9) von der zentralen Kältemaschine (6) abschaltet.

## Beschreibung

Die Erfindung betrifft ein verfahren sowie eine Anlage zum Kühlen von Räumen, insbes. von solchen, in denen der unkontrollierte Austritt von Wasser eine Gefahr für die Nutzung der in den Räumen installierten Komponenten bedeutet, wobei ein Wärmeträgermedium in einer zentralen Kältemaschine gekühlt und den Räumen zur Verfügung gestellt wird.

Hauptanwendungsgebiet der Erfindung sind Schaltzentralen für Kraftwerke. Jede Schaltzentrale umfaßt eine Mehrzahl von Räumen, wobei jeder Raum eine Mehrzahl von Schaltschränken und sonstigen Einrichtungen enthält, in denen elektrische Verlustleistung in Wärme umgewandelt wird. Um eine Überhitzung zu vermeiden, ist es unerläßlich, jeden der Räume ganzjährig individuell zu kühlen.

Dies geschieht unter Einsatz einer zentralen Kältemaschine, die beispielsweise auf dem Dach des Gebäudes angeordnet ist. Bisher wurde als Wärmeträgermedium Luft eingesetzt. Die Kaltluft wurde über Luftkanäle auf die Räume verteilt und in die Räume eingeblasen. Die Warmluft wurde ins Freie abgeblasen, gegebenenfalls unter Zwischenschaltung eines Ventilators. Luftkanäle stellen aufgrund ihrer großen Querschnitte einen hohen bautechnischen Aufwand dar und bedingen unter Umständen sogar eine Vergrößerung der Raumhöhe.

Der Erfindung liegt die Aufgabe zugrunde, ein Verfahren und eine Anlage der eingangs genannten Art zur Verfügung zu stellen, die einfacher und energetisch günstiger sind.

Zur Lösung dieser Aufgabe ist das eingangs genannte Verfahren erfindungsgemäß dadurch gekennzeichnet, daß als Wärmeträgermedium Wasser verwendet wird, daß in jedem der Räume eine Luftzirkulationsströmung erzeugt wird und daß für jeden der Räume eine Wärmeübertragung von der zirkulierenden Luft auf das gekühlte Wasser durchgeführt wird.

Wasser ist aufgrund seiner hohen Wärmekapazität in der Lage, Wärme raumsparend abzuführen. Gegenüber dem Einblasen von Kaltluft und dem Abführen einer entsprechenden Warmluftmenge ist die Erzeugung einer zirkulationsluftströmung energetisch günstiger.

Bei elektrischen Schaltanlagen bestand die generelle Vorschrift, die Räume wasserfrei zu halten. Der Einsatz von Wasser als Wärmeträgermedium und die Durchführung der Wärmeübertragung innerhalb des zugehörigen Raumes läßt sich dennoch vertreten, sofern geeignete Sicherheitsmaßnamen ergriffen werden. Eine dieser Maßnahmen besteht in Weiterbildung der Erfindung darin, die Wärmeübertragung nahe einer Außenwand des zugehörige Raumes durchzuführen und am Ort der Wärmeübertragung entstehendes Kondensationswasser aus dem Raum herauszuführen.

Ferner kann es unter diesem Gesichtspunkt vorteilhaft sein, bei einem etwaigen Wasseraustritt innerhalb des Zugehörigen Raumes die Wasserzufuhr zu unterbrechen und das ausgetretene Wasser aus dem Raum herauszuführen.

Die erfindungsgemäße Anlage weist eine zentrale Kältemaschine zum Kühlen eines Wärmeträgermediums und ein die Kältemaschine mit jedem der Räume verbindendes Leitungssystem für das Wärmeträgermedium auf und ist zur Lösung der gestellten Aufgabe dadurch gekennzeichnet, daß das Leitungssystem Wasservorlauf- und -rücklaufleitungen umfaßt, daß jedem der Räume ein an die Wasservorlauf- und -rücklaufleitungen angeschlossener Wärmetauscher zugeordnet ist und daß jedem Wärmetauscher ein Gebläse zugeordnet ist, welches erwärmte Luft aus dem zugehörigen Raum ansaugt und gekühlte Luft in den zugehörigen Raum einbläst.

Dabei kann es vorteilhaft sein, daß der Wärmetauscher außerhalb des zugehörigen Raumes angeordnet und mit diesem durch Lufteinlaß- und -auslaßöffnungen verbunden ist. Der zugehörige Raum bleibt also völlig wasserfrei. Dabei wird man den Wärmetauscher außen an einer Außenwand des Raumes anordnen, um die Luftführung zu vereinfachen.

Unter Außenwand ist im vorliegenden Fall nicht unbedingt die Außenwand des Gebäudes zu verstehen. Es soll sich lediglich nicht um eine Trennwand zwischen zu kühlenden Räumen handeln. Neben Gebäude-Außenwänden kommen also auch Außenwände in Frage, die die zu kühlenden Räume von Fluren, Treppenhäusern oder anderen nicht zu kühlenden Räumen trennen.

Bei Anordnung des Wärmetauschers außerhalb des zugehörigen Raumes ergibt sich die vorteilhafte Möglichkeit, auch das Gebläse außerhalb des zugehörigen Raums anzuordnen und mit einem verstellbaren Außenluftanschluß zu versehen. Damit übernimmt die Kühlanlage gleichzeitig die Belüftung des zugehörigen Raumes, die ohnehin immer erforderlich ist.

Allerdings ergeben sich bei einer Anordnung des Wärmetauschers an der Außenwand des zugehörigen Raumes auch gewisse Nachteile, die auf dem Sektor des Brandschutzes liegen. Die Lufteinlaß- und -auslaßöffnungen müssen nämlich mit automatischen Brandschutzklappen versehen werden, die entsprechend aufwendig sind.

Daher ist es unter Umständen vorteilhafter, daß der Wärmetauscher und das Gebläse innerhalb des zugehörigen Raumes angeordnet sind, wobei der Wärmetauscher nahe einer Außenwand des Raumes montiert ist, durch die die Wasservorlauf- und -rücklaufleitungen hindurchführen. Der wasserführende Teil der Anlage erstreckt sich also nur geringfügig in den zugehörigen Raum hinein und läßt sich daher sicherheitstechnisch leicht beherrschen.

Dabei wird in Weiterbildung der Erfindung vorgeschlagen, daß unterhalb des Wärmetauschers eine Auffangwanne für Kondensationswasser angeordnet ist und daß die Ablaufwanne einen aus dem Raum hinausführenden Ablauf aufweist. Gegen die Bildung von Kondensationswasser an den Wasservorlauf- und -rücklaufleitungen können gewisse Maßnahmen ergriffen werden, beispielsweise eine dampfdiffusionsdichte Isolierung, die von einem Blechmantel umgeben ist und eine gute Wärmeisolierung bildet. Am Wärmetauscher selbst hingegen ist ein Auskondensieren der Luftfeuchtigkeit unvermeidbar. Die elektrischen Komponenten werden hierdurch jedoch nicht beeinträchtigt, da das Kondensationswasser sofort aus dem zugehörigen Raum herausgeführt wird.

Ein weiterer vorteilhafter sicherheitstechnischer Aspekt besteht darin, daß unterhalb der Auffangwanne für Kondensationswasser eine Sicherheits-Auffangwanne angeordnet ist, die auch das im Schaltraum befindliche Rohrsystem umfaßt, und daß der Sicherheits-Auffangwanne ein Wasserwächter zugeordnet ist, der bei seiner Aktivierung Schnellschlußventile in den Wasservorlauf- und -rücklaufleitungen des zugehörigen Wärmetauschers betätigt. Das regelmäßig anfallende Kondensationswasser wird durch die obere Auffangwanne abgeführt. Kommt es jedoch zu einer Undichtigkeit in dem innerhalb des zugehörigen Raumes liegenden wasserführenden System, fließt Wasser in die Sicherheits-Auffangwanne und betätigt dort den Wasserwächter, woraufhin die Schnellschlußventile den jeweiligen Wärmetauscher vom Wasserkreislauf trennen.

Als ebenfalls vorteilhafte Alternative wird vorgeschlagen, daß die innerhalb des zugehörigen Raumes verlaufenden Abschnitte der Wasservorlauf- und -rücklaufleitungen als Doppelrohre ausgebildet sind und daß den Außenrohren ein Wasserwächter zugeordnet ist, der bei seiner Aktivierung Schnellschlußventile in den Wasservorlauf- und -rücklaufleitungen des zugehörigen Wärmetauschers betätigt.

Die Schnellschlußventile sind in bevorzugter Weiterbildung der Erfindung außerhalb des zugehörigen Raumes angeordnet.

Ferner ist es vorteilhaft, den Wärmetauscher mit dem Gebläse zu einer Baueinheit zusammenzufassen. Das Register bildet eine geschlossene Baugruppe mit einem Gehäuse, das einen Lufteinlaß und einen Luftauslaß aufweist, wobei das Gebläse für die Luftzirkulationsströmung sorgt. Im Gegensatz zu einem Luftverteilersystem mit Luftkanälen führt die Luftzirkulationsströmung zu einer ungleichmäßigeren Temperaturverteilung. Diese kann jedoch in Kauf genommen werden, da in den Räumen der Schaltzentrale, in denen die Schaltschränke stehen, normalerweise keine regelmäßig besetzten Arbeitsplätze vorgesehen sind. Im übrigen kann die Erfindung auch in Verbindung mit Luftkanälen praktiziert werden, wobei dann allerdings die bautechnische Einsparung innerhalb der zu kühlenden Räume entfällt.

Vorteilhafterweise umfaßt das Gebläse zwei Ventilatoren, die sich bei unterschiedlichen Raumtemperaturen einschalten. Das System wird dadurch redundant.

Bei einem Stillstand der Schaltanlagen wird eine Kühlung sämtlicher oder einzelner Räume überflüssig. Es kann sogar im Winter erforderlich werden, die Räume zu beheizen. Hierzu wird vorgeschlagen, dem Wärmetauscher eine Elektroheizung zuzuordnen, die mit dem Gebläse des Wärmetauschers zusammenwirkt.

Ferner wird in Weiterbildung der Erfindung vorgeschlagen, daß die zentrale Kältemaschine mit einer Einrichtung für "freie Kühlung" versehen ist. Unter "freier Kühlung" ist ein System zu versehen, bei dem das Wärmeträgermedium über einen zusätzlicher Wärmetauscher geleitet wird, der von der Außenluft gekühlt wird.

Hervorzuheben ist noch, daß bei der Regelung des Systems der Umlauf des Wärmeträgermediums, nämlich des Wassers, nicht beeinflußt werden muß. Jeder Raum wird individuell geregelt über das Gebläse des Wärmetauschers, ohne daß Einfluß genommen würde auf das zur Kältemaschine führende Leitungssystem.

Die Erfindung wird im folgenden anhand bevorzugter Ausführungsbeispiele im Zusammenhang mit der beiliegenden Zeichnung näher erläutert. Die Zeichnung zeigt in:
- Fig. 1: ein erstes Ausführungsbeispiel nach der Erfindung;
- Fig. 2: ein zweites Ausführungsbeispiel nach der Erfindung.

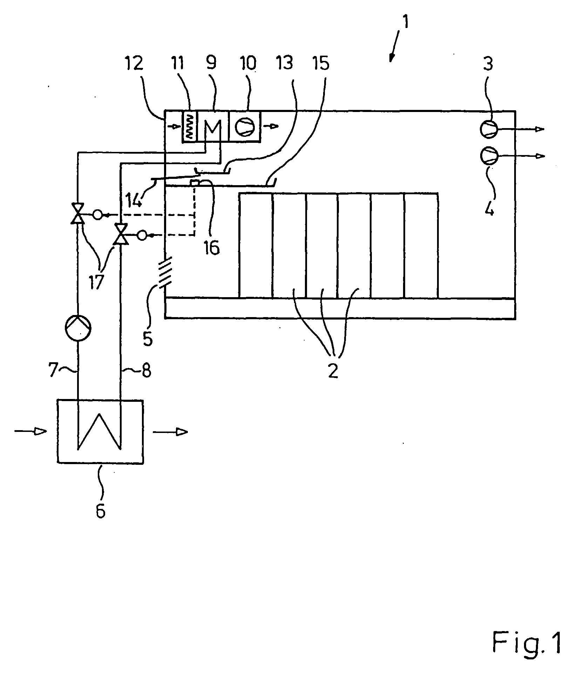

Fig. 1 zeigt in schmematischem Vertikalschnitt einen Raum 1, der mit mehreren gleichartigen oder ähnlichen Räumen zu einer Gruppe zusammengefaßt ist. Gemeinsam ist diesen Räumen, daß sie gekühlt werden müssen, weil in ihnen elektrische Verlustleistung in Wärme umgewandelt wird. Derartige Verhältnisse sind beispielsweise in Schaltzentralen von Kraftwerken gegeben, auf die die Erfindung bevorzugt anwendbar ist.

Im vorliegenen Fall enthält der Raum 1 mehrere Reihen von Schaltschränken 2, die sich während des Betriebes aufheizen. Im übrigen ist der Raum 1 in üblicher Weise mit einem Brandgasgebläse 3, einem Entlüftungsgebläse 4 und einem Frischlufteinlaß 5 versehen.

Sämtliche Räume bzw. sämtliche Räume einer Gruppe werden von einer gemeinsamen Kältemaschine 6 gekühlt. Die Kältemaschine 6 arbeitet mit "freier Kühlung", d.h., sie enthält einen Wärmetauscher, über den die Wärme bei entsprechend niedrigen Außentemperaturen an die Außenluft abgegeben werden kann.

Die Kältemaschine 6 arbeitet mit Wasser als Wärmeträgermedium und ist über ein Leitungssystem mit den einzelnen Räumen verbunden, hier wiedergegeben durch eine Wasservorlaufleitung 7 und eine Wasserrücklaufleitung 8, die zu einem Wärmetauscher 9 führen. Dem Wärmetauscher 9 ist ein Gebläse 10 zugeordnet. Der Wärmetauscher 9 und das Gebläse 10 sind zu einer einheitlichen Baugruppe zusammengeschlossen. Wie durch Pfeile angedeutet, saugt diese Baugruppe warme Raumluft an, fördert sie durch den Wärmetauscher 9, kühlt sie dort ab und bläst sie in den Raum 1 zurück, wodurch in letzterem eine Luftzirkulationsströmung entsteht. Das Leitungssystem kann im Hinblick auf die hohe Wärmekapazität von Wasser sehr klein dimensioniert sein. Auch kann innerhalb des Raumes 1 aufgrund der Luftzirkulationsströmung auf großvolumige Luftkanäle verzichtet werden, obwohl durchaus die Möglichkeit besteht, die Luftzirkulationsströmung durch Luftkanäle zu steuern, um eine gleichmäßigere Raumtemperaturverteilung zu erzielen.

Dem Wärmetauscher 9 ist eine Elektroheizung 11 vorgeschaltet, die bei entsprechend niedrigen Raumtemperaturen und ggf. bei gleichzeitiger Abschaltung der Schaltschränke 2 für eine Beheizung des Raums 1 sorgt. Die Elektroheizung 11 ist in dem aus dem Wärmetauscher 9 und dem Gebläse 10 bestehenden Gerät integriert, und zwar derart, daß das Gebläse 10 auch für die Elektroheizung 11 zuständig ist.

Bei Räumen, in denen elektrische Schaltanlagen installiert sind, muß dafür gesorgt werden, daß Störfälle durch austretendes Wassers mit Sicherheit vermieden werden. Hierzu dienen im vorliegenden Fall mehrere Maßnahmen.

Zum einen ist der Wärmetauscher 9 nahe einer Außenwand 12 des Raums 1 angeordnet. Nur kurze Abschnitte der Wasservor- und -rücklaufleitungen 7 und 8 erstrecken sich also in den Raum 1 hinein. Die Außenwand 12 muß nicht unbedingt die Gebäudeaußenwand sein. Sie darf lediglich nicht an einen weiteren zu kühlenden Raum angrenzen.

Unterhalb des Wärmetauschers 9 befindet sich eine Auffangwanne 13 für das unvermeidbarerweise anfallende Kondensationswasser. Die Auffangwanne 13 ist mit einem Ablauf 14 versehen, der aus dem Raum 1 hinausführt. Das Kondensationswasser wird also direkt nach seiner Entstehung abgeleitet und verbleibt nicht innerhalb des Raumes 1.

Unterhalb der Auffangwanne 13 und unterhalb der innerhalb des Raums 1 verlaufenden Abschnitte der Wasservor- und -rücklaufleitungen 7 und 8 ist ferner eine Sicherheits-Auffangwanne 15 vorgesehen. Die Sicherheits-Auffangwanne 15 ist mit einem Wasserwächter 16 ausgerüstet. Sollte es zu einem Störfall kommen, so gelangt Wasser in die Sicherheits-Auffangwanne 15. Daraufhin spricht sofort der Wasserwächter 16 an und schaltet den Raum 1 von der gemeinsamen Kältemaschine 6 ab. hierzu dienen Schnellschlußventile 17, die außerhalb des Raums 1 angeordnet sind. Die übrigen, an die gemeinsame Kältemaschine 6 angeschlossenen Räume werden durch diesen Absperrvorgang nicht berührt.

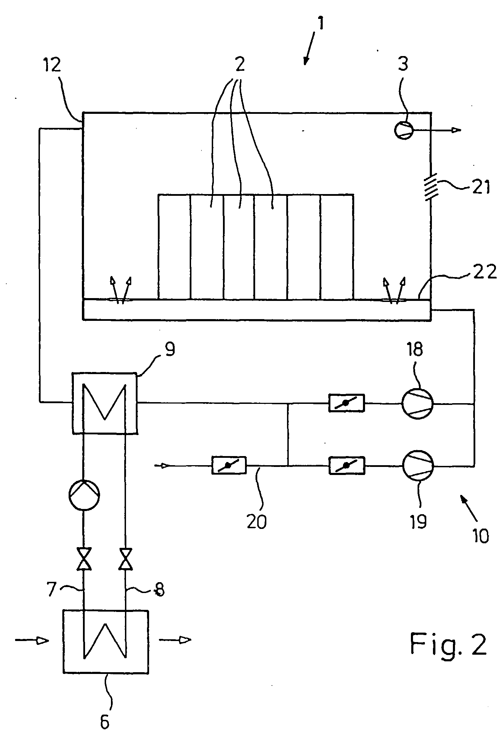

Die Variante nach Fig. 2 unterscheidet sich von der nach Fig. 1 im wesentlichen dadurch, daß der Wärmetauscher 9 und das Gebläse 10 außerhalb des Raums 1 angeordnet sind. In der Regel wird man sie an der Außenwand 12 bzw. an einer anderen Außenwand installieren. Auf jeden Fall wird der Abstand zum Raum 1 so kurz wie möglich gehalten, um voluminöse Luftkanäle weitgehend zu vermeiden.

Die Installation des Wärmetauschers 9 außerhalb des Raumes 1 hält letzteren völlig wasserfrei, so daß auch hierdurch eine Gefährdung der Schaltschränke 2 ausgeschlossen ist. Im Übrigen bleiben die Vorteile der Luftzirkulationsströmung innerhalb des Raumes 1 und der Verwendung von Wasser als Wärmeträgermedlum erhalten.

Im vorliegenden Fall besteht das Gebläse 10 des Wärmetauschers 9 aus zwei Ventilatoren 18 und 19, die auf unterschiedliche Schalttemperaturen eingestellt sind und dementsprechend ein redundantes System bilden. Die Ventilatoren 18 und 19 sind nicht nur an den Wärmetauscher 9, sondern auch an eine Außenluftleitung 20 angeschlossen. Sie können also in gesteuerter Weise Außenluft in den Raum 1 einblasen und dadurch die ohnehin erforderliche Funktion der Belüftung übernehmen. Ein Entlüftungsgebläse ist nicht mehr erforderlich. Vielmehr genügt eine steuerbare Entlüftungsöffnung 21.

Die gekühlte, rezirkulierte Luft, ggf. zusammen mit Frischluft, wird unterhalb eines Zwischenbodens 22 des Raums 1 eingeblasen und gelangt von hier aus, wie durch Pfeile angedeutet, in den Bereich der Schaltschränke 2. Der ohnehin vorhandene Zwischenboden 22 bildet also einen Luftkanal und sorgt für eine gleichmäßige Raumtemperaturverteilung.

Im Rahmen der Erfindung sind durchaus Abwandlungsmöglichkeiten gegeben. So kann auch das Gebläse 10 nach Fig. 1 mit zwei Ventilatoren ausgerüstet werden. Ferner besteht die Möglichkeit, die im Raum 1 verlaufenden Abschnitte der Wasservorlauf- und -rücklaufleitungen 7 und 8 als Doppelrohre auszubilden, wobei dem Außenrohr ein Wasserwächter zugeordnet wird, der im Falle eines Leitungsbruchs die Schnellschlußventile 17 aktiviert. Ferner kann auch bei der Ausführungsform nach Fig. 1 mit Luftkanälen zur Vergleichmäßigung der Raumtemperaturverteilung gearbeitet werden.

## Patentansprüche

1. Verfahren zum Kühlen von Räumen, insbesondere von solchen, in denen der unkontrollierte Autritt von Wasser eine Gefahr für die Nutzung der in den Räumen installierten Komponenten bedeutet, wobei ein Wärmeträgermedium in einer zentralen Kältemaschine gekühlt und den Räumen zur Verfügung gestellt wird,
**dadurch gekennzeichnet,**
daß als Wärmeträgermedium Wasser verwendet wird, daß in jedem der Räume eine Luftzirkulationsströmung erzeugt wird und daß für jeden der Räume eine Wärmeübertragung von der zirkulierenden Luft auf das gekühlte Wasser durchgeführt wird.

2. Verfahren nach Anspruch 1, dadurch gekennzeichnet, daß die Wärmeübertragung innerhalb und nahe einer Außenwand des zugehörigen Raumes durchgeführt wird und daß am Ort der Wärmeübertragung entstehendes Kondensationswasser aus dem Raum herausgeführt wird.

3. Verfahren nach Anspruch 1 oder 2, dadurch gekennzeichnet, daß bei einem etwaigen Wasseraustritt innerhalb des zugehörigen Raumes die Wasserzufuhr unterbrochen.

4. Anlage zum Kühlen von Räumen, insbesondere von solchen, in denen der unkontrollierte Austritt von Wasser eine Gefahr für die Nutzung der in den Räumen installierten Komponenten bedeutet, mit einer zentralen Kältemaschine zum Kühlen eines Wärmeträgermediums und einem die Kältemaschine mit jedem der Räume verbindenden Leitungssystem für das Wärmeträgermedium,
**dadurch gekennzeichnet,**
daß das Leitungssystem Wasservorlauf- und -rücklaufleitungen (7, 8) umfaßt, daß jedem der Räume (1) ein an die Wasservorlauf- und -rücklaufleitungen (7,8) angeschlossener Wärmetauscher (9) zugeordnet ist und daß jedem Wärmetauscher (9) ein Gebläse (10) zugeordnet ist, welches erwärmte Luft aus dem zugehörigen Raum (1) ansaugt und gekühlte Luft in den zugehörigen Raum (1) einbläst.

5. Anlage nach Anspruch 4, dadurch gekennzeichnet, daß der Wärmetauscher (9) außerhalb des zugehörigen Raumes (1) angeordnet und mit diesem durch Lufteinlaß- und -auslaßöffnungen verbunden ist.

6. Anlage nach Anspruch 5, dadurch gekennzeichnet, daß das Gebläse (10) außerhalb des zugehörigen Raums (1) angeordnet ist und einen verstellbaren Außenluftanschluß (20) aufweist.

7. Anlage nach Anspruch 4, dadurch gekennzeichnet, daß der Wärmetauscher (9) und das Gebläse (10) innerhalb des zugehörigen Raumes (1) angeordnet sind, wobei der Wärmetauscher (9) nahe einer Außenwand (12) des Raumes (1) montiert ist, durch die die Wasservorlauf- und -rücklaufleitungen (7,8) hindurchführen.

8. Anlage nach Anspruch 7, dadurch gekennzeichnet, daß unterhalb des Wärmetauschers (9) eine Auffangwanne (13) für Kondensationswasser angeordnet ist und daß die Auffangwanne einen aus dem Raum (1) hinausführenden Ablauf (14) aufweist.

9. Anlage nach Anspruch 8, dadurch gekennzeichnet, daß unterhalb der Auffangwanne (13) für Kondensationswasser und unterhalb der innerhalb des zugehörigen Raumes verlaufenden Abschnitte der Wasservorlauf- und -rücklaufleitungen (7,8) eine Sicherheits-Auffangwanne (15) angeordnet ist und daß der Sicherheits-Auffangwanne (15) ein Wasserwächter (16) zugeordnet ist, der bei seiner Aktivierung Schnellschlußventile (17) in den Wasservorlauf- und -rücklaufleitungen (7,8) des zugehörigen Wärmetauschers (9) betätigt.

10. Anlage nach Anspruch 8, dadurch gekennzeichnet, daß die innerhalb des zugehörigen Raumes (1) verlaufenden Abschnitte der Wasservorlauf- und -rücklaufleitungen (7,8) als Doppelrohre ausgebildet sind und daß den Außenrohren ein Wasserwächter zugeordnet ist, der bei seiner Aktivierung Schnellschlußventile in den Wasservorlauf- und -rücklaufleitungen des zugehörigen Wärmetausches (9) betätigt.

11. Anlage nach Anspruch 9 oder 10, dadurch gekennzeichnet; daß die Schnellschlußventile (17) außerhalb des zugehörigen Raumes (1) angeordnet sind.

12. Anlage nach einem der Ansprüche 4 bis 11, dadurch gekennzeichnet, daß der Wärmetauscher (9) mit dem Gebläse (10) zu einer Baueinheit zusammengefaßt ist.

13. Anlage nach einem der Ansprüche 4 bis 12, dadurch gekennzeichet, daß das Gebläse (10) zwei Ventilatoren (18, 19) umfaßt, die sich bei unterschiedlichen Raumtemperaturen einschalten.

14. Anlage nach einem der Ansprüche 4 bis 13, dadurch gekennzeichnet, daß dem Wärmetauscher (9) eine Elektroheizung (11) zugeordnet ist.

15. Anlage nach Anspruch 14, dadurch gekennzeichnet, daß die Elektroheizung (11) mit dem Gebläse (10) des Wärmetauschers (9) zusammenwirkt.

16. Anlage nach einem der Ansprüche 4 bis 15, dadurch gekennzeichnet, daß die zentrale Kältemaschine (6) mit einer Einrichtung für "freie Kühlung" versehen ist.
